# EUROPEAN PATENT APPLICATION

(11) **EP 2 169 193 A1**
(43) Date of publication of application: **31.03.2010**
(21) Application number: 09012159.1
(22) Date of filing: 24.09.2009
(51) Int. Cl.: F01N 3/22, F01N 3/28, F01N 3/30

(54) **Saddle-riding type vehicle**

(30) Priority: 26.09.2008 JP 2008247528
(71) Applicant: Yamaha Hatsudoki Kabushiki Kaisha, Iwata-shi, Shizuoka-ken 438-8501 (JP)
(72) Inventor: Itou, Yutaka, Iwata-shi Shizuoka-ken 438-8501 (JP); Morozumi, Naohiro, Iwata-shi Shizuoka-ken 438-8501 (JP)
(74) Representative: Zimmermann, Tankred Klaus

(57) **Abstract**

A saddle-riding type vehicle (100) according to the present invention includes an internal combustion engine (1) causing combustion at an air/fuel ratio smaller than a stoichiometric air/fuel ratio; a first catalyst (2A) provided in an exhaust path (7a) to which combustion gas is discharged from the internal combustion engine (1); a second catalyst (2B) provided in the exhaust path downstream with respect to the first catalyst (2A); and a secondary air introduction device (3) for introducing secondary air to a portion (7a') of the exhaust path (7a), the portion being (7a') between the first catalyst (2A) and the second catalyst (2B). The first catalyst (2A) and the second catalyst (2B) each contain a precious metal component containing at least one of platinum, rhodium, palladium and gold. The second catalyst (2B) further contains an ammonia decomposing component for decomposing ammonia. The ammonia decomposing component contains iridium.

## Description

### BACKGROUND OF THE INVENTION

### 1. Field of the Invention:

The present invention relates to a saddle-riding type vehicle such as a motorcycle or the like, and more particularly relates to a saddle-riding type vehicle including an internal combustion engine causing combustion at an air/fuel ratio smaller than a stoichiometric air/fuel ratio (i.e., a fuel-rich side air/fuel ratio).

### 2. Description of the Related Art:

For cleaning combustion gas (exhaust gas) discharged from an engine of a motor vehicle, a three-way catalyst is in wide use. A three-way catalyst reduces or oxidizes CO (carbon monoxide), HC (hydrocarbon) and NOₓ (a nitrogen oxide) contained in the exhaust gas into water, carbon dioxide and nitrogen.

In order to perform reduction or oxidation using a three-way catalyst efficiently, it is preferable to cause combustion at an air/fuel ratio at which the fuel and air are combusted with no excessiveness or shortage (referred to as a "stoichiometric air/fuel ratio"). For this purpose, a system of detecting the concentration of oxygen in the exhaust gas by an oxygen sensor and performing feedback control on the amount of the fuel to be injected based on the detected concentration of oxygen such that the air/fuel ratio is the stoichiometric air/fuel ratio has been proposed.

However, an engine provides a higher output when causing combustion at an air/fuel ratio smaller than the stoichiometric air/fuel ratio (i.e., a fuel-rich side air/fuel ratio). For this reason, when the amount of the fuel to be injected is controlled such that the air/fuel ratio is always the stoichiometric air/fuel ratio, a sufficiently high engine output may not occasionally be obtained with a saddle-riding type vehicle such as a motorcycle, which has a smaller displacement than that of a four-wheel automobile. In addition, in order to perform a precise feedback control, it is necessary to generate mixed gas by an injection (fuel injection) system instead of a carburetor system currently in wide use for motorcycles. Such use of an injection system increases the production cost.

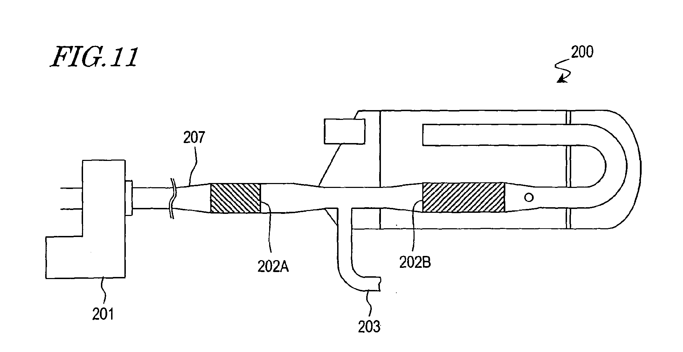

Pamphlet of International Publication No. 2004/113696 proposes an exhaust gas cleaning system for an engine causing combustion at a fuel-rich side air/fuel ratio. FIG. **11** shows an exhaust gas cleaning system **200** disclosed in Pamphlet of International Publication No. 2004/113696.

As shown in FIG. **11**, the exhaust gas cleaning system **200** includes an engine **201** and an exhaust pipe **207** connected to an exhaust port of the engine **201**. In the exhaust pipe **207,** a first catalyst **202A** and a second catalyst **202B** located downstream with respect to the first catalyst **202A** are provided. A secondary air introduction pipe **203** for introducing secondary air is connected to a portion of the exhaust pipe **207**, the portion being between the first catalyst **202A** and the second catalyst **202B**. The first catalyst **202A** and the second catalyst **202B** have, for example, the same components as a known three-way catalyst.

In the exhaust gas cleaning system **200**, the engine **201** is driven at a fuel-rich side air/fuel ratio. Exhaust gas discharged from the engine **201** first contacts the first catalyst **202A**. A three-way catalyst provides a high NOₓ cleaning ratio with a fuel-rich side air/fuel ratio. Therefore, NOₓ in the exhaust gas is cleaned by the first catalyst **202A** until a required final cleaning ratio is obtained. At this point, CO and HC in the exhaust gas are also partially cleaned.

Next, the secondary air introduced from the secondary air introduction pipe **203** is mixed with the exhaust gas which has passed the first catalyst **202A,** and thus the air/fuel ratio of the exhaust gas is shifted to a fuel-lean side. By the exhaust gas of a fuel-lean side air/fuel ratio contacting the second catalyst **202B**, CO and HC in the exhaust gas which have not been cleaned are now cleaned.

Namely, this system first causes the exhaust gas to contact the first catalyst **202A** under a reducing atmosphere to clean mainly NOₓ and then causes the exhaust gas to contact the second catalyst **202B** under an oxidizing atmosphere to clean CO and HC remaining in the exhaust gas. Thus, CO, HC and NOₓ in the exhaust gas can be cleaned highly efficiently.

The exhaust gas cleaning system **200** described in Pamphlet of International Publication No. 2004/113696 allows the air/fuel ratio of the mixed gas supplied to the engine **201** to be smaller than the stoichiometric air/fuel ratio (i.e., to be set on the fuel-rich side). Therefore, the engine output of a saddle-riding type vehicle having a relatively small displacement can be improved to enhance the drivability thereof. In addition, this system functions sufficiently with the carburetor system used for generating mixed gas, which is advantageous over the injection system in terms of the cost.

### SUMMARY OF THE INVENTION

It is an object of the present invention to improve the NOₓ cleaning ratio in a saddle-riding type vehicle including an internal combustion engine casing combustion at an air/fuel ratio smaller than a stoichiometric air/fuel ratio.

A saddle-riding type vehicle according to the present invention includes an internal combustion engine causing combustion at an air/fuel ratio smaller than a stoichiometric air/fuel ratio; a first catalyst provided in an exhaust path to which combustion gas is discharged from the internal combustion engine; a second catalyst provided in the exhaust path downstream with respect to the first catalyst; and a secondary air introduction device for introducing secondary air to a portion of the exhaust path, the portion being between the first catalyst and the second catalyst. The first catalyst and the second catalyst each contain a precious metal component containing at least one of platinum, rhodium, palladium and gold; the second catalyst further contains an ammonia decomposing component for decomposing ammonia; and the ammonia decomposing component contains iridium.

The present invention is based on the result of detailed studies by which the inventors found out that with the system disclosed in Pamphlet of International Publication No. 2004/113696, NOₓ is partially reduced by the first catalyst into ammonia (NH₃) instead of nitrogen (N₂) as described in detail later. The generated NH₃ is oxidized by the second catalyst to generate NOₓ. Therefore, in actuality, the NOₓ cleaning ratio cannot be made sufficiently high. Such a phenomenon is unique and is generated when, while the secondary air is introduced, exhaust gas discharged from an engine causing combustion at a fuel-rich side air/fuel ratio is cleaned by two catalysts (catalysts located upstream and downstream with respect to a portion at which the secondary air is introduced).

In a preferable embodiment, the second catalyst includes a first catalyst layer containing the precious metal component; and a second catalyst layer provided on the first catalyst layer and containing the ammonia decomposing component.

In a preferable embodiment, the second catalyst layer has an average thickness of 10 µm or greater and 100 µm or less.

In a preferable embodiment, the second catalyst includes a first region containing the ammonia decomposing component; and a second region located downstream with respect to the first region and containing the precious metal component.

In a preferable embodiment, the first region has a length of 20 mm or greater.

In a preferable embodiment, the saddle-riding type vehicle according to the present invention further includes a muffler, wherein the first catalyst and the second catalyst are located in the muffler.

A saddle-riding type vehicle according to the present invention includes, in an exhaust path, a first catalyst and a second catalyst provided downstream with respect to the first catalyst, and also includes a secondary air introduction device for introducing secondary air in a portion of the exhaust path, the portion being between the first catalyst and the second catalyst. Combustion gas (exhaust gas) discharged from the internal combustion engine, causing combustion at an air/fuel ratio smaller than a stoichiometric air/fuel ratio, first contacts the first catalyst and, after being mixed with the secondary air introduced by the secondary air introduction device, contacts the second catalyst. The first catalyst and the second catalyst each contain a precious metal component containing at least one of platinum, rhodium, palladium and gold. Therefore, NOₓ, a part of CO and a part of HC in the exhaust gas are first cleaned by the first catalyst, and then the remaining CO and HC are cleaned by the second catalyst. The second catalyst of the saddle-riding type vehicle according to the present invention further contains an ammonia decomposing component for decomposing ammonia (NH₃). Therefore, NH₃ generated by the precious metal component in the first catalyst as a result of reducing NOₓ can be decomposed, and so the generation of NOₓ by the second catalyst can be suppressed. Hence, according to the present invention, the NOₓ cleaning ratio can be improved. The ammonia decomposing component in the second catalyst contains iridium. Owing to iridium contained in the ammonia decomposing component, the second catalyst can perform the cleaning of CO and HC by the precious metal component and the cleaning of NH₃ by the ammonia decomposing component in parallel with each other in a preferable manner. Since the internal combustion engine of the saddle-riding type vehicle according to the present invention causes combustion at an air/fuel ratio smaller than a stoichiometric air/fuel ratio (i.e., at a fuel-rich side air/fuel ratio), a high output is obtained and the drivability is improved. Hence, the saddle-riding type vehicle according to the present invention is superb both in the running performance and the environmental performance.

It is preferable that the second catalyst includes a first catalyst layer containing the precious metal component and a second catalyst layer provided on the first catalyst layer and containing the ammonia decomposing component. Owing to such a two-layer structure of the second catalyst, the exhaust gas passes the second catalyst layer containing the ammonia decomposing component before reaching the first catalyst layer containing the precious metal component. Therefore, the generation of NOₓ, which would be otherwise caused by the oxidation of NH₃ by the first catalyst, can be effectively suppressed. Thus, the NOₓ cleaning ratio can be further improved.

From the point of view of decomposing NH₃ with more certainty, it is preferable that the second catalyst layer has an average thickness of 10 µm or greater and 100 µm or less.

Alternatively, the second catalyst may have a first region containing the ammonia decomposing component and a second region located in the exhaust path downstream with respect to the first region and containing the precious metal component. Namely, the first region and the second region may be arranged in this order from an upstream position toward a downstream position in the exhaust path. Owing to such an arrangement, the exhaust gas passes the first region containing the ammonia decomposing component before reaching the second region containing the precious metal component. Therefore, the generation of NOₓ, which would be otherwise caused by the oxidation of NH₃ in the second region, can be effectively suppressed. Thus, the NOₓ cleaning ratio can be further improved.

From the point of view of decomposing NH₃ with more certainty, it is preferable that the first region has an average length (length along the gas flow direction in the exhaust path) of 20mm or greater.

According to the present invention, owing to the ammonia decomposing component contained in the second catalyst, a sufficiently high NOₓ cleaning ratio can be realized even at a lower temperature than in the conventional art. Therefore, the first catalyst and the second catalyst can be located at a position farther from the internal combustion engine than in the conventional art. For this reason, both the first catalyst and the second catalyst can be located in the muffler. By locating the first catalyst and the second catalyst in the muffler, heat damage can be prevented, and advantages in terms of the external appearance are also obtained.

The present invention can improve the NOₓ cleaning ratio in a saddle-riding type vehicle including an internal combustion engine causing combustion at an air/fuel ratio smaller than a stoichiometric air/fuel ratio.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

FIG. **1** schematically shows a structure of an exhaust gas cleaning system included in a saddle-riding type vehicle in a preferable embodiment of the present invention.

FIG. **2** is a graph showing the NOₓ cleaning ratio and the NH₃ cleaning ratio provided by iridium.

FIG. **3** is a cross-sectional view showing an example of a structure of a first catalyst included in the saddle-riding type vehicle in a preferable embodiment of the present invention.

FIGS. **4A** and **4B** are each a cross-sectional view showing an example of a structure of a second catalyst included in the saddle-riding type vehicle in a preferable embodiment of the present invention.

FIG. **5** is a cross-sectional view showing an example of a structure of a second catalyst included in the saddle-riding type vehicle in a preferable embodiment of the present invention.

FIGS. **6A** and **6B** are each a cross-sectional view showing an example of a more specific structure of the second catalyst shown in FIG. 5.

FIG. **7** is a graph showing the relationship between the time (s) and the speed of the vehicle (km/h) in the EU3 mode.

FIGS. **8A, 8B** and **8C** are graphs respectively showing the CO (carbon monoxide), THC (total hydrocarbon) and NOₓ (a nitrogen oxide) emission levels in the exhaust gas cleaning systems in Examples 1 through 3 and Comparative Examples 1 through 3.

FIG. **9** schematically shows a structure of an exhaust gas cleaning system included in a saddle-riding type vehicle in a preferable embodiment of the present invention.

FIG. **10** shows an example of a motorcycle including the exhaust gas cleaning system shown in FIG. **1** or FIG. **9**.

FIG. **11** schematically shows a structure of a conventional exhaust gas cleaning system.

### DETAILED DESCRIPTION OF PREFERRED EMBODIMENTS

Hereinafter, embodiments of the present invention will be described with reference to the drawings. The present invention is not limited to the following embodiments.

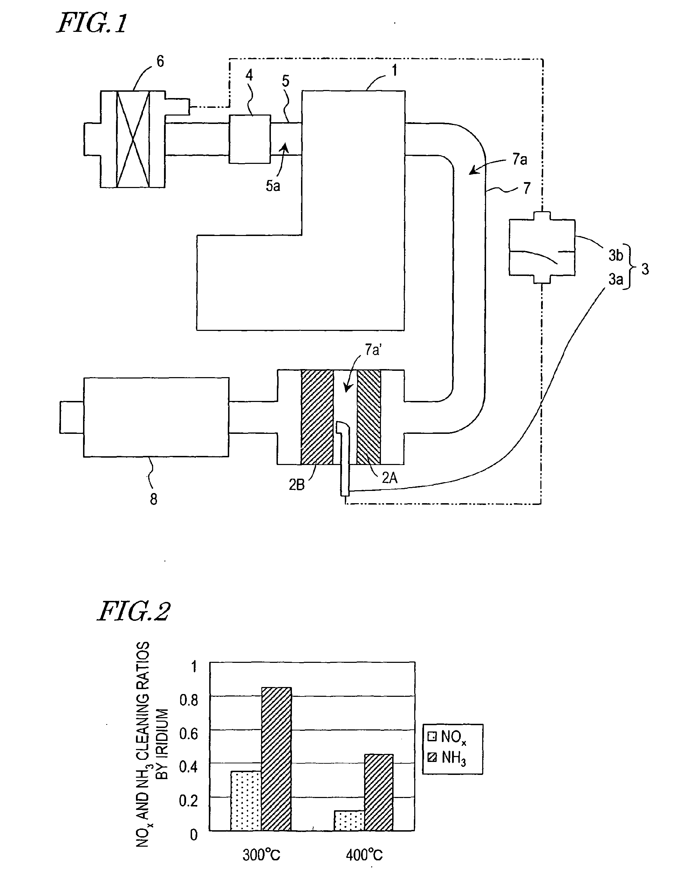

FIG. **1** schematically shows a structure of an exhaust gas cleaning system included in a saddle-riding type vehicle in this embodiment. As shown in FIG. **1**, the saddle-riding type vehicle in this embodiment includes an internal combustion engine **1**, a first catalyst **2A** and a second catalyst **2B**, and a secondary air introduction device **3**.

The internal combustion engine (typically, 4-stroke gasoline engine) **1** causes combustion at an air/fuel ratio smaller than a stoichiometric air/fuel ratio. Since the combustion is caused at an air/fuel ratio smaller than the stoichiometric air/fuel ratio, i.e., a fuel-rich side air/fuel ratio, a higher output is obtained than in the case where the combustion is caused at the stoichiometric air/fuel ratio. Typically, the combustion is caused at an air/fuel ratio of 12.5 or larger and 14.5 or smaller. The internal combustion engine **1** is supplied with mixed gas from a carburetor **4** via an intake path **5a.** The intake path **5a** is a space enclosed by an intake pipe **5** connected to an intake port of the internal combustion engine **1**. An air cleaner **6** is provided upstream with respect to the carburetor **4**.

The first catalyst **2A** is provided in an exhaust path **7a** to which combustion gas is discharged from the internal combustion engine **1**. The second catalyst **2B** is provided in the exhaust path **7a** downstream with respect to the first catalyst **2A**. The exhaust path **7a** is a space enclosed by an exhaust pipe **7** connected to an exhaust port of the internal combustion engine **1**.

The secondary air introduction device **3** introduces secondary air to a portion **7a'** of the exhaust path **7**, the portion **7a'** being between the first catalyst **2A** and the second catalyst **2B**. As shown in FIG. **1**, the secondary air introduction device **3** includes, for example, a secondary air introduction pipe **3a** connected to the exhaust pipe **7** and a lead valve **3b** provided between the secondary air introduction pipe **3a** and the air cleaner **6**. The lead valve **3b** acts as a check valve for preventing a reverse flow of the secondary air supplied from the air cleaner **6** to the secondary air introduction pipe **3a.** The secondary air introduction device **3** may have any structure which can introduce the secondary air to a portion between the first catalyst **2A** and the second catalyst **2B**, and is not limited to having a structure shown herein. A muffler **8** for reducing exhaust noise is connected to a downstream end of the exhaust pipe **7**.

The first catalyst **2A** and the second catalyst **2B** each contain a precious metal component. The precious metal component specifically contains at least one of platinum (Pt), rhodium (Rh), palladium (Pd) and gold (Au). The precious metal component of each of the first catalyst **2A** and the second catalyst **2B** cleans CO, HC and NOₓ in the combustion gas (exhaust gas), discharged from the internal combustion engine **1**, by oxidation or reduction.

The second catalyst **2B** of the exhaust gas cleaning system in this embodiment further contains an ammonia decomposing component for decomposing ammonia. The ammonia decomposing component specifically contains iridium (Ir). Iridium is contained in the second catalyst **2B** independently or in the form of a compound.

Owing to the first catalyst **2A** and the second catalyst **2B** having the above-described structure, the exhaust gas cleaning system in this embodiment can clean the exhaust gas from the internal combustion engine **1**, which causes combustion at a fuel-rich side air/fuel ratio, at a high efficiency. Especially, the exhaust gas cleaning system in this embodiment can prevent the generation of NOₓ derived from NH₃, and thus can improve the final NOₓ cleaning ratio. Hereinafter, the reason for this will be described specifically.

First, the reason why the conventional exhaust gas cleaning system **200** shown in FIG. **11** cannot improve the NOₓ cleaning ratio sufficiently will be described. Table 1 shows reactions caused by each of the first catalyst **202A** and the second catalyst **202B** in the conventional exhaust gas cleaning system **200**.

**Table 1**

| Conventional exhaust gas cleaning system | | | | | |
|---|---|---|---|---|---|
| Reaction by the first catalyst | | | Reaction by the second catalyst | | |
| Main | CO+H₂O→CO₂+H₂ | (1) | Main | | |
| | -CH₂+H₂O→CO₂+H₂ | (2) | | CO+O₂→CO₂ | (6) |
| | 2NOₓ+ (2_{X}+3) H₂→2NH3+2ₓH₂O | (3) | | -CH₂+O₂→CO₂+H₂O | (7) |
| Sub | 6NOₓ+4ₓNH₃→ (2ₓ+3) N₂+6ₓH₂O | (4) | | 4NH₃+(2ₓ+3)O₂→4NOₓ+6H₂O | (8) |
| | 2NH₃→N₂+3H₂ | (5) | | | |

By the first catalyst **202A**, as represented by chemical equations (1), (2) and (3), CO, HC and NOₓ are cleaned. Specifically, as respectively represented by chemical equations (1) and (2), CO and HC react with H₂O to generate CO₂ and H₂. NOₓ reacts with H₂ to generate NH₃ and H₂O. A part of NOₓ reacts with NH₃ generated by the reaction of chemical equation (3) to be decomposed into N₂ and H₂O as represented by chemical equation (4). However, all of NH₃ is not consumed by this reaction. As represented by chemical equation (5), an amount of NH₃ decomposed is very small. Namely, in the conventional exhaust gas cleaning system 200, while NOₓ is cleaned by the first catalyst **202A** located upstream, NH₃ is generated, and a part thereof is undesirably supplied to the second catalyst **202B.**

By the second catalyst **202B**, as represented by chemical equations (6) and (7), the remaining CO and HC are cleaned. Specifically, as respectively represented by chemical equations (6) and (7), CO and HC are oxidized to generate CO₂, or CO₂ and H₂O. By the second catalyst **202B**, as represented by chemical equation (8), NH₃ is oxidized to undesirably generate NOₓ.

As described above, in the conventional exhaust gas cleaning system **200**, NOₓ is reduced into N₂ and also NH₃ by the first catalyst **202A**, and NH₃ is oxidized by the second catalyst **202B** to generate NOₓ. Therefore, the NOₓ cleaning ratio cannot be made sufficiently high.

Now, the reason why the exhaust gas cleaning system in this embodiment can improve the NOₓ cleaning ratio will be described. Table 2 shows reactions caused by each of the first catalyst **2A** and the second catalyst **2B** in the exhaust gas cleaning system in this embodiment.

**Table 2**

| Exhaust gas cleaning system according to the present invention | | | | | |
|---|---|---|---|---|---|
| Reaction by the first catalyst | | | Reaction by the second catalyst | | |
| Main | CO+H₂O→aCO₂+H₂ | (1) | Main | CO+O₂→CO₂ | (6) |
| | -CH₂+H₂O→CO₂+H₂ | (2) | | -CH₂+O₂→CO₂+H₂O | (7) |
| | 2NOₓ+ (2_{X}+3) H₂→2NH₃+2ₓH₂O | (3) | | 4NH₃+3O₂→2N₂+6H₂O | (9) |
| Sub | 6NOₓ+4ₓNH₃→(2ₓ+3)N₂+6ₓH₂O | (4) | Sub | 4NH₃+(2ₓ+3)O₂→4NOₓ+6H₂O | (8) |
| | 2NH₃→N₂+3H₂ | (5) | | | |

By the first catalyst **2A**, the reactions represented by chemical equations (1), (2) and (3) occur as main reactions and the reactions represented by chemical equations (4) and (5) occur as sub reactions, as by the first catalyst **202A** in the conventional exhaust gas cleaning system. Namely, CO, HC and NOₓ are cleaned and also NH₃ is generated, and a part of NH₃ is supplied to the second catalyst **2B**.

By the second catalyst **2B**, as represented by chemical equations (6) and (7), the remaining CO and HC are cleaned. Since the second catalyst **2B** in this embodiment contains an ammonia decomposing component, the generated NH₃ is decomposed by the reaction represented by chemical formula (9). Namely, by the second catalyst **2B** in this embodiment, the ammonia decomposition reaction represented by chemical formula (9) occurs as a main reaction. Accordingly, the NOₓ generation reaction by oxidation of NH₃ as represented by chemical equation (8) is reduced. Therefore, the generation of NOₓ is suppressed.

As described above, the exhaust gas cleaning system in this embodiment decomposes NH₃ by the ammonia decomposing component contained in the second catalyst **2B** (NH₃ generated as a result of reduction of NOₓ), and so suppresses the generation of NOₓ, which would be otherwise caused by the second catalyst **2B**. Thus, the NOₓ cleaning ratio is improved.

In this embodiment, the ammonia decomposing component in the second catalyst **2B** contains iridium. As metal elements acting as a catalyst for decomposing ammonia, vanadium (V), iron (Fe), copper (Cu) and the like are known. Studies performed by the present inventors found that when any of these elements is used as an ammonia decomposing component, it is difficult to proceed with the NH₃ decomposition reaction as represented by chemical equation (9) while cleaning CO and HC as represented by chemical equations (6) and (7). By the second catalyst **2B**, NH₃ is oxidized substantially at the same time as CO and HC under an oxygen atmosphere. Therefore, when vanadium, iron or copper mentioned above is used as an ammonia decomposing component, NH₃ is excessively oxidized to generate NOₓ. An attempt to suppress such generation of NOₓ acts against making the CO and HC cleaning ratios sufficiently high. By contrast, where the ammonia decomposing component contains iridium, the cleaning of CO and HC by the precious metal component and the cleaning of NH₃ by the ammonia decomposing component can be performed in parallel with each other in a preferable manner.

Iridium could act as a catalyst for directly cleaning NOₓ. However, as shown in FIG. **2**, the NH₃ cleaning ratio provided by iridium is much higher than the NOₓ cleaning ratio also provided by iridium. Therefore, in order to improve the NOₓ cleaning ratio in the entire exhaust gas cleaning system, it is preferable to first clean NOₓ by the precious metal component in the first catalyst **2A** and then decompose NH₃, generated as a result of such cleaning, by the ammonia decomposing component (containing iridium) in the second catalyst **2B** as in this embodiment, instead of using iridium as a catalyst for cleaning NOₓ.

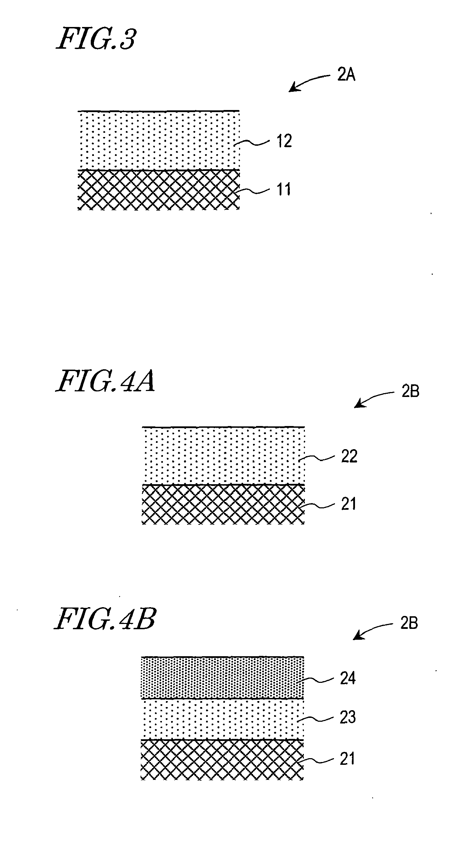

Now, with reference to FIGS. **3, 4A** and **4B**, examples of more specific structures of the first catalyst **2A** and the second catalyst **2B** will be described. FIG. **3** schematically shows a cross-sectional structure of a surface and the vicinity thereof of the first catalyst **2A,** and FIGS. **4A** and **4B** schematically show cross-sectional structures of a surface and the vicinity thereof of the second catalyst **2B.**

As shown in FIG. **3**, the first catalyst **2A** includes a carrier substrate **11** and a catalyst layer **12** provided on the carrier substrate **11**. The carrier substrate **11** has, for example, a honeycomb structure formed of a metal material (such a carrier substrate is referred to as a "metal carrier"). The catalyst layer **12** contains a precious metal component as mentioned above. It is preferable that the catalyst layer **12** further contains at least one of alumina, ceria, and zirconia. Alumina, ceria, and zirconia act as a carrier of the precious metal component and also as a promoter in a preferable manner.

As shown in FIG. **4A****,** the second catalyst **2B** includes a carrier substrate **21** and a catalyst layer **22** provided on the carrier substrate **21**. The carrier substrate **21** is, for example, a metal carrier. The catalyst layer **22** contains both a precious metal component and an ammonia decomposing component as mentioned above. Namely, in the catalyst layer **22**, the precious metal component and the ammonia decomposing component coexist. It is preferable that the catalyst layer **22** further contains at least one of alumina, ceria, and zirconia. Alumina, ceria, and zirconia act as a carrier of the precious metal component and the ammonia decomposing component containing iridium and also as a promoter in a preferable manner.

Alternatively, as shown in FIG. **4B**, the second catalyst **2B** includes the carrier substrate **21**, a first catalyst layer **23** provided on the carrier substrate **21**, and a second catalyst layer **24** provided on the first catalyst layer **23**. The first catalyst layer **23** contains a precious metal component, and the second catalyst layer **24** contains an ammonia decomposing component. Namely, on the carrier substrate **21**, the first catalyst layer **23** containing the precious metal component and the second catalyst layer **24** containing the ammonia decomposing component are stacked in this order. In other words, the second catalyst layer **24** is located outer to the first catalyst layer **23.** It is preferable that the first catalyst layer **23** further contains at least one of alumina, ceria, and zirconia. Alumina, ceria, and zirconia act as a carrier of the precious metal component and also as a promoter in a preferable manner. It is preferable that the second catalyst layer **24** further contains alumina. Alumina acts as a carrier of the ammonia decomposing component containing iridium and also as a promoter.

From the point of view of further improving the NOₓ cleaning ratio, the structure shown in FIG. **4B** is more preferable to the structure shown in FIG. **4A** for the second catalyst **2B**. Owing to the second catalyst **2B** having the two-layer structure shown in FIG. **4B**, the exhaust gas passes the second catalyst layer **24** containing the ammonia decomposing component before reaching the first catalyst layer **23** containing the precious metal component. Therefore, the generation of NOₓ, which would be otherwise caused by the oxidation of NH₃ in the first catalyst layer **23,** can be effectively suppressed. This can further improve the NOₓ cleaning ratio. In the case where the second catalyst **2B** has the structure shown in FIG. **4A****,** there is an advantage that the production process of the second catalyst **2B** can be simplified.

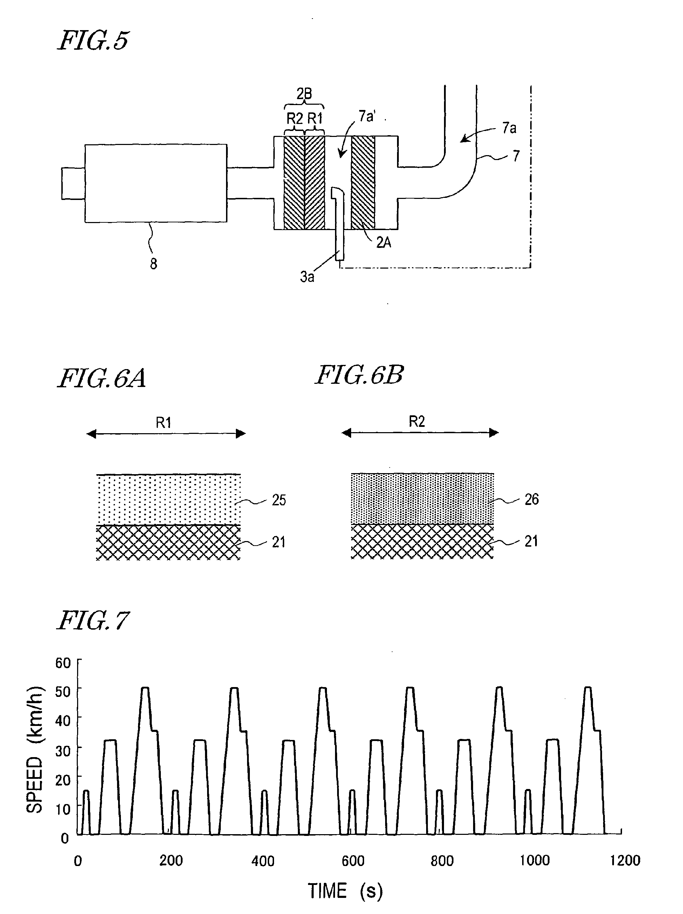

Alternatively, the second catalyst **2B** may have a structure shown in FIG. **5****.** In the structure shown in FIG. **5**, the second catalyst **2B** includes a first region **R1** containing an ammonia decomposing component and a second region **R2** located downstream with respect to the first region **R1** and containing a precious metal component. Namely, the first region **R1** and the second region **R2** are arranged in this order from an upstream position toward a downstream position in the exhaust path **7a.** In the first region **R1,** as shown in FIG. **6A**, a catalyst layer **25** containing the ammonia decomposing component is provided on the carrier substrate **21.** In the second region **R2,** as shown in FIG. **6B****,** a catalyst layer 26 containing the precious metal component is provided on the carrier substrate **21**. Owing to the arrangement shown in FIG. **5**, the exhaust gas passes the first region **R1** containing the ammonia decomposing component before reaching the second region **R2** containing the precious metal component. Therefore, the generation of NOₓ, which would be otherwise caused by the oxidation of NH₃ in the second region **R2**, can be effectively suppressed. This can further improve the NOₓ cleaning ratio.

The structure shown in FIG. **4B** and the structure shown in FIG. **5** are both preferable for improving the NOₓ cleaning ratio. The structure shown in FIG. **4B** has another advantage that heat generated by the oxidation reactions of CO and HC in the first catalyst layer **23** can be used for the NH₃ decomposition reaction in the second catalyst layer **24** and so the effect of reducing NOₓ is significant even at a low temperature. By contrast, the structure shown in FIG. **5** has an advantage that a slurry for forming the catalyst layers needs to be dried and sintered only once after being applied (the slurry needs to be dried and sintered twice in the case of a two-layer structure) and so the production can be reduced.

In the structure shown in FIG. **4B**, a preferable average thickness of the second catalyst layer **24** is 10 µm or greater and 100 µm or less from the point of view of decomposing NH₃ with more certainty. In the structure shown in FIG. **5**, a preferable length of the first region **R1** (length along the gas flow direction in the exhaust path **7a)** is 20 mm or greater from the point of view of decomposing NH₃ with more certainty.

Now, results of actually producing exhaust gas cleaning systems in this embodiment on a trial basis and testing the effects thereof will be described.

Three types of exhaust gas cleaning systems in this embodiment (Examples 1 through 3) and exhaust gas cleaning systems for comparison (Comparative Examples 1 through 3) were produced by the following methods. The second catalyst **2B** has the structure shown in FIG. **4B** in Example 1, the structure shown in FIG. **5** in Examples 2, and the structure shown in FIG. **4A** in Examples 3. In Comparative Examples 1 through 3, a catalyst provided in an upstream portion of the exhaust path (corresponding to the first catalyst **2A**) and a catalyst provided in a downstream portion of the exhaust path (corresponding to the second catalyst **2B**) both contains a precious metal component. Note that in Comparative Example 1, neither the catalyst in the upstream portion nor the catalyst in the downstream portion contains an ammonia decomposing component. In Comparative Example 2, the catalyst in the downstream portion contains V-TiO₂ as the ammonia decomposing component. In Comparative Example 3, the catalyst in the downstream portion contains Fe-zeolite as the ammonia decomposing component.

### (Example 1)

### <First catalyst>

A metal carrier **11** having a diameter of 45 mm, a length of 60 mm and a number of cells of 100 cpsi was prepared, and coated with a commercially available reduction catalyst (Pt = 1.0 wt%, Rh = 0.2 wt%, CeO₂ - ZrO₂ = 30 wt%, and the remaining part is Al₂O₃) at 100 g/L to form a catalyst layer **12**. Thus, the first catalyst **2A** was produced. The concentrations of platinum and rhodium in the first catalyst **2A** were Pt = 1.0 g/L and Rh = 0.2 g/L.

### <Second catalyst>

First, a slurry for a first catalyst layer **23** was prepared. Specifically, first, to 200 g of ion exchange water, 70 g of γ alumina, 30 g of ceria-zirconia (Ce:Zr = 1:1), 0.5 g of dinitrodiamine platinum in the amount converted into Pt, and 1.5 g of palladium nitrate in the amount converted into Pd were added. These components were stirred at 40°C for 2 hours (pH was changed from 2.0 to 2.5). Next, this mixture was dried at 120°C for 12 hours, and then sintered at 600°C for 1 hour. This sintered substance, 100 g of ion exchange water, 20 g of aluminasol and 5 g of aluminum nitrate hexahydrate were pulverized in a ball mill (pH: 4.5). Thus, a slurry for the first catalyst layer **23** was obtained.

Next, a slurry for a second catalyst layer **24** was prepared. Specifically, first, to 200 g of ion exchange water, 100 g of γ alumina and 2.0 g of iridium nitrate in the amount converted into Ir were added. These components were stirred at 40°C for 2 hours (pH was changed from 2.5 to 3.5) to cause iridium to adsorb to γ alumina. Next, this mixture was dried at 120°C for 12 hours, and then sintered at 600°C for 1 hour. This sintered substance, 100 g of ion exchange water, 20 g of aluminasol and 5 g of aluminum nitrate hexahydrate were pulverized in a ball mill (pH: 4.5). Thus, a slurry for the second catalyst layer **24** was obtained.

Then, the slurry for the first catalyst layer **23** was applied on a surface of a metal carrier **21** having a diameter of 54 mm, a length of 80 mm and a number of cells of 100 cpsi, and dried at 120°C and sintered at 600°C. The post-sintering coating amount was 100 g/L. The obtained first catalyst layer **23** contained 0.5 g/L of platinum and 1.5 g/L of palladium and had an average thickness of 55 µm.

Next, the slurry for the second catalyst layer **24** was applied on a surface of the first catalyst layer **23**, and dried at 120°C and sintered at 600°C. The post-sintering coating amount was 100 g/L. The obtained second catalyst layer **24** contained 2.0 g/L of iridium and had an average thickness of 55 µm. Thus, the second catalyst **2B** was produced. The concentrations of platinum, palladium and iridium in the second catalyst **2B** were Pt = 0.5 g/L, Pd = 1.5 g/L, and Ir = 2.0 g/L.

The first catalyst **2A** and the second catalyst **2B** produced as described above were respectively attached to an upstream position and a downstream position in the exhaust path **7a** to produce the exhaust gas cleaning system having the structure shown in FIG. **1****.**

### (Example 2)

### <First catalyst>

The first catalyst **2A** was produced in substantially the same manner as in Example 1.

### <Second catalyst>

A metal carrier **21** having the same specifications as those of the metal carrier **21** for the second catalyst **2B** in Example 1 was prepared. As the slurry for a catalyst layer **25** in the first region **R1,** a slurry having the same composition as that of the slurry for the second catalyst layer **24** in Example 1 was prepared. As the slurry for a catalyst layer **26** in the second region **R2,** a slurry having the same composition as that of the slurry for the first catalyst layer **23** in Example 1 was prepared. The slurry for the first catalyst layer **25** in the first region **R1** was applied on the metal carrier **21** from an entrance over an area of **40** mm therefrom, and the slurry for the second catalyst layer **26** in the second region **R2** was applied on the metal carrier **21** from an exit over an area of **40** mm therefrom. The slurries were dried and sintered to form the catalyst layers **25** and **26**. The slurries for the catalyst layer **25** in the first region **R1** and for the catalyst layer **26** in the second region **R2** were each applied such that the post-sintering coating amount would be 200 g/L and the post-sintering average thickness would be 110 µm. Thus, the second catalyst **2B** was produced. The overall concentrations of platinum, palladium and iridium in the second catalyst **2B** were Pt = 0.5 g/L, Pd = 1.5 g/L, and Ir = 2.0 g/L.

### (Example 3)

### <First catalyst>

The first catalyst **2A** was produced in substantially the same manner as in Example 1.

### <Second catalyst>

A metal carrier **21** having the same specifications as those of the metal carrier **21** for the second catalyst **2B** in Example 1 was prepared. A slurry having the same composition as that of the slurry for the catalyst layer **23** in Example 1 and a slurry having the same composition as that of the slurry for the second catalyst layer **24** in Example 1 were mixed in equal amounts. Thus, a slurry for a catalyst layer **22** was prepared. The slurry for the catalyst layer **22** was applied on a surface of the metal carrier **21**, and dried and sintered to form the catalyst layer **22**. The slurry for the catalyst layer **22** was applied such that the post-sintering coating amount would be 200 g/L. Thus, the second catalyst **2B** was produced. The concentrations of platinum, palladium and iridium in the second catalyst **2B** were Pt = 0.5 g/L, Pd = 1.5 g/L, and Ir = 2.0 g/L.

### (Comparative Example 1)

### <Catalyst in an upstream portion>

A catalyst to be provided in an upstream portion of the exhaust path was prepared in substantially the same manner as the first catalyst **2A** in Example 1.

### <Catalyst in a downstream portion>

A catalyst not containing iridium was produced in substantially the same manner as the second catalyst **2B** in Example 1 except that the second catalyst layer **24** was not formed. The concentrations of platinum and palladium in the catalyst were Pt = 0.5 g/L and Pd = 1.5 g/L.

An exhaust gas cleaning system was produced using the two catalysts produced as described above.

### (Comparative Example 2)

### <Catalyst in an upstream portion>

A catalyst to be provided in an upstream portion of the exhaust path was prepared in substantially the same manner as the first catalyst **2A** in Example 1.

### <Catalyst in a downstream portion>

A catalyst containing V-TiO₂ was produced in substantially the same manner as the second catalyst **2B** in Example 1 except that V-TiO₂ was incorporated into the second catalyst layer **24** instead of iridium. The concentrations of platinum, palladium and V-TiO₂ in the catalyst were Pt = 0.5 g/L, Pd = 1.5 g/L, and V-TiO₂ = 100 g/L.

An exhaust gas cleaning system was produced using the two catalysts produced as described above.

### (Comparative Example 3)

### <Catalyst in an upstream portion>

A catalyst to be provided in an upstream portion of the exhaust path was prepared in substantially the same manner as the first catalyst **2A** in Example 1.

### <Catalyst in a downstream portion>

A catalyst containing Fe-zeolite was produced in substantially the same manner as the second catalyst **2B** in Example 1 except that Fe-zeolite was incorporated into the second catalyst layer **24** instead of iridium. The concentrations of platinum, palladium and Fe-zeolite in the catalyst were Pt = 0.5 g/L, Pd = 1.5 g/L, and Fe-zeolite = 100 g/L.

An exhaust gas cleaning system was produced using the two catalysts produced as described above.

### (Test results)

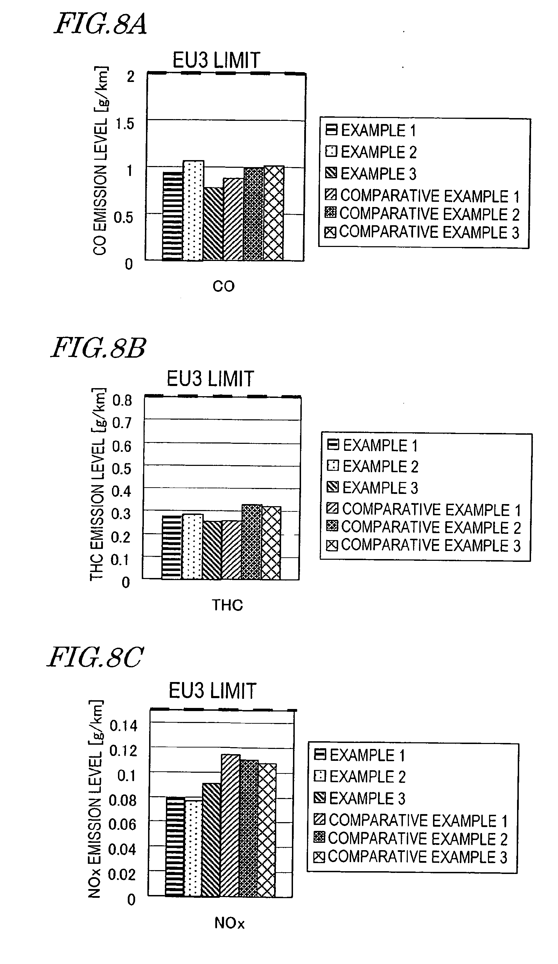

The exhaust gas cleaning systems in Examples 1 through 3 and Comparative Examples 1 through 3 were each attached to a motorcycle having a displacement of 125 cc, and the CO (carbon monoxide), THC (total hydrocarbon) and NOₓ (a nitrogen oxide) emission levels were measured in the EU3 mode. In the EU3 mode, as shown in FIG. **7**, the measurement is performed while the speed of the vehicle is periodically changed along time. Before the measurement, the vehicle was driven for 6 hours with the temperature of the exhaust gas being set to 850°C to forcibly deteriorate each catalyst. The measurement results are shown in FIGS. **8A** through **8C**.

As understood from FIG. **8A** and **8B**, Examples 1 through 3 and Comparative Examples 1 through 3 are not much different in the CO emission level and the THC emission level. By contrast, as understood from FIG. **8C**, regarding the NOₓ emission level, Examples 1 through 3 are much different from Comparative Examples 1 through 3. In Examples 1 through 3, the NOₓ emission level is significantly lower than in Comparative Examples 1 through 3. As seen from this, the exhaust gas cleaning system in this embodiment can make the NOₓ emission level lower than in the conventional art.

Also as understood from FIG. **8C**, the NOₓ emission level is lower in Examples 1 and 2 than in Example 3. This shows that the structures shown in FIGS. **4B** and **5** are more preferable to the structure shown in FIG. **4A** from the point of view of improving the NOₓ cleaning ratio. In additional consideration of the CO emission level shown in FIG. **8A** and the like, it is understood that Example 1 is most preferable comprehensively, and the structure shown in FIG. **4B** is best in terms of the environmental performance. The reasons why the structure shown in FIG. **4B** is better than the structure shown in FIG. **5** are the following. With the structure shown in FIG. **4B**, the heat generated by the CO and HC oxidation reactions in the first catalyst layer **23** is usable for the NH₃ decomposition reaction in the second catalyst layer **24**; and with the structure shown in FIG. **4B**, the CO and HC oxidation can be performed at a position closer to the internal combustion engine **1** (i.e., at a higher temperature) than with the structure shown in FIG. **5**.

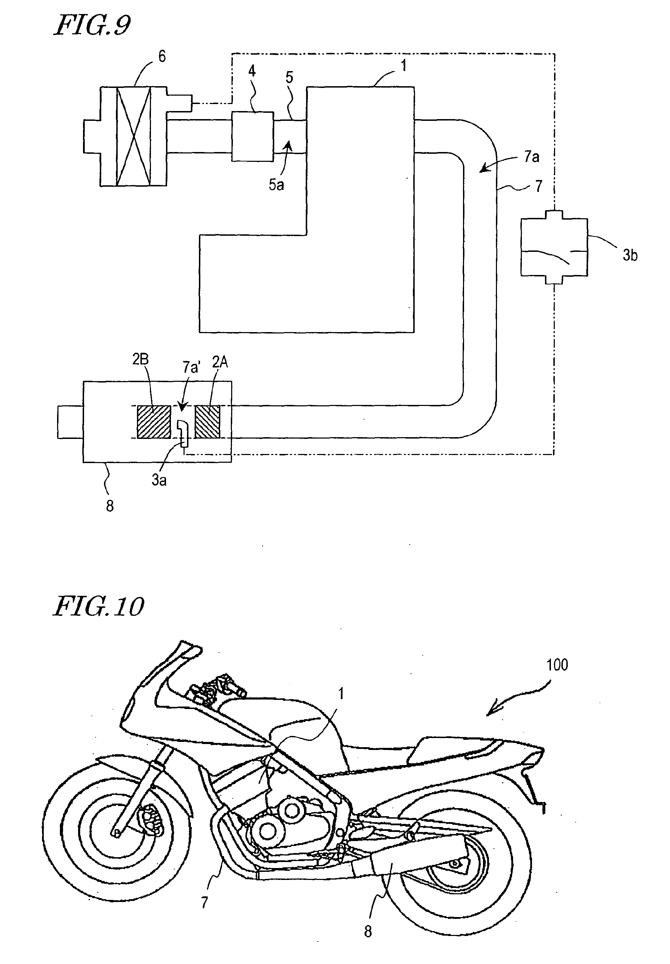

In the structure shown in FIG. **1**, the first catalyst **2A** and the second catalyst **2B** are located upstream with respect to the muffler **8**. Alternatively, as shown in FIG. **9**, the first catalyst **2A** and the second catalyst **2B** may be located in the muffler **8**. With the exhaust gas cleaning system in this embodiment, the second catalyst **2B** contains an ammonia decomposing component and so a sufficiently high NOₓ cleaning ratio can be realized at a lower temperature than in the conventional art. Namely, the exhaust gas cleaning system in this embodiment is preferably usable even at a lower temperature than in the conventional art. For example, the conventional exhaust gas cleaning system shown in FIG. **11** is usable at 650°C to 900°C, whereas the exhaust gas cleaning system in this embodiment is usable at 550°C to 900°C.

Therefore, the first catalyst **2A** and the second catalyst **2B** can be located at a position farther from the internal combustion engine **1** than in the conventional art. For example, in the conventional exhaust gas cleaning system shown in FIG. **11**, the first catalyst **202A** is located at a position 150 mm to 400 mm away from the engine **201**. By contrast, in the exhaust gas cleaning system in this embodiment, the first catalyst **2A** can be located at a position 150 mm to 600 mm away from the internal combustion engine **1**. This is why both of the first catalyst **2A** and the second catalyst **2B** may be located in the muffler **8** in the exhaust gas cleaning system in this embodiment.

An area around the first catalyst **2A** and an area around the second catalyst **2B** have a high temperature because of the reaction heat caused by the cleaning reactions. Locating the first catalyst **2A** and the second catalyst **2B** in the muffler **8** as shown in FIG. **9** prevents peripheral elements from being softened or deteriorated (heat-damaged) and also provides advantages in the external appearance (improvement of design, etc.).

As described above, according to the exhaust gas cleaning system in this embodiment, NOₓ in the combustion gas discharged from an internal combustion engine causing combustion at an air/fuel ratio smaller than a stoichiometric air/fuel ratio can be cleaned at a high efficiency.

The exhaust gas cleaning system in this embodiment provides a high NOₓ cleaning performance and so is preferably used for motorcycles. FIG. **10** shows a motorcycle **100** including the exhaust gas cleaning system in this embodiment. The motorcycle **100** includes the engine **1,** the exhaust pipe **7** connected to the exhaust port of the engine **1**, and the muffler **8** connected to the exhaust pipe **7**. In the exhaust pipe **7**, the first catalyst **2A** and the second catalyst **2B** are provided although not shown in FIG. **10****.** The motorcycle **100** further includes the secondary air introduction device **3** for introducing secondary air to the exhaust pipe **7**.

In the motorcycle **100,** the engine **1** is driven at a fuel-rich side air/fuel ratio. Therefore, a high engine output is obtained and a high drivability is realized. The motorcycle **100** includes the above-described exhaust gas cleaning system and so can clean NOₓ contained in the exhaust gas from the engine **1** driven at a fuel-rich side air/fuel ratio. Owing to these, the motorcycle **100** is superb both in the running performance and the environmental performance.

In the structures shown in FIGS. **1** and **9**, the carburetor **4** is provided (carburetor system) as an example. Alternatively, the motorcycle **100** may have a structure including an injector (namely, mixed gas may be generated by the injection system).

The exhaust gas cleaning system in this embodiment is not limited to being used in motorcycles and is preferably usable in any saddle-riding type vehicle on which a rider may bet astraddle. For example, the exhaust gas cleaning system in this embodiment is usable for ATVs such as buggies. A saddle-riding type vehicle generally has a small displacement and so it is preferable that the internal combustion engine thereof is driven at a fuel-rich side air/fuel ratio. Therefore, it is highly meaningful to mount the exhaust gas cleaning system in this embodiment.

The present invention can improve the NOₓ cleaning ratio in a saddle-riding type vehicle including an internal combustion engine causing combustion at an air/fuel ratio smaller than a stoichiometric air/fuel ratio. The present invention is preferably usable for various types of saddle-riding type vehicles including motorcycles.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

1. A saddle-riding type vehicle, comprising:
an internal combustion engine causing combustion at an air/fuel ratio smaller than a stoichiometric air/fuel ratio;
a first catalyst provided in an exhaust path to which combustion gas is discharged from the internal combustion engine;
a second catalyst provided in the exhaust path downstream with respect to the first catalyst; and
a secondary air introduction device for introducing secondary air to a portion of the exhaust path, the portion being between the first catalyst and the second catalyst;
wherein:
the first catalyst and the second catalyst each contain a precious metal component containing at least one of platinum, rhodium, palladium and gold;
the second catalyst further contains an ammonia decomposing component for decomposing ammonia; and
the ammonia decomposing component contains iridium.

2. The saddle-riding type vehicle of claim 1, wherein the second catalyst includes:
a first catalyst layer containing the precious metal component; and
a second catalyst layer provided on the first catalyst layer and containing the ammonia decomposing component.

3. The saddle-riding type vehicle of claim 2, wherein the second catalyst layer has an average thickness of 10 µm or greater and 100 µm or less.

4. The saddle-riding type vehicle of claim 1, wherein the second catalyst includes:
a first region containing the ammonia decomposing component; and
a second region located downstream with respect to the first region and containing the precious metal component.

5. The saddle-riding type vehicle of claim 4, wherein the first region has a length of 20 mm or greater.

6. The saddle-riding type vehicle of any one of claims 1 through 5, further comprising a muffler, wherein the first catalyst and the second catalyst are located in the muffler.
